(19) **Europäisches Patentamt / European Patent Office / Office européen des brevets**

(11) **EP 3 980 720 B1**

(12) # FASCICULE DE BREVET EUROPEEN

(45) Date de publication et mention de la délivrance du brevet:
**20.12.2023 Bulletin 2023/51**

(21) Numéro de dépôt: **20726483.9**

(22) Date de dépôt: **25.05.2020**

(51) Classification Internationale des Brevets (IPC):
***G01C 21/16*** *(2006.01)* ***G01C 25/00*** *(2006.01)*

(52) Classification Coopérative des Brevets (CPC):
**G01C 21/165; G01C 25/005**

(86) Numéro de dépôt international:
**PCT/EP2020/064366**

(87) Numéro de publication internationale:
**WO 2020/244945 (10.12.2020 Gazette 2020/50)**

(54) **PROCEDE ET DISPOSITIF DE RECALAGE D'UNE CENTRALE INERTIELLE D'UN MOYEN DE TRANSPORT A PARTIR D'INFORMATIONS DELIVREES PAR UN VISEUR DU MOYEN DE TRANSPORT**

VERFAHREN UND VORRICHTUNG ZUM RÜCKSETZEN EINER TRÄGHEITSEINHEIT EINER TRANSPORTVORRICHTUNG AUF DER BASIS VON INFORMATIONEN, DIE VON EINEM SUCHER DER TRANSPORTVORRICHTUNG BEREITGESTELLT WERDEN

METHOD AND DEVICE FOR RESETTING AN INERTIAL UNIT OF A TRANSPORT MEANS ON THE BASIS OF INFORMATION DELIVERED BY A VIEWFINDER OF THE TRANSPORT MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2019 FR 1905987**

(43) Date de publication de la demande:
**13.04.2022 Bulletin 2022/15**

(73) Titulaire: **Safran Electronics & Defense**
**75015 Paris (FR)**

(72) Inventeur: **LIGNON, Christian**
**75015 Paris (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2015 253 150**

**Description**

DOMAINE TECHNIQUE

La présente invention concerne un procédé et un dispositif de recalage d'une centrale inertielle d'un moyen de transport à partir d'informations délivrées par un viseur du moyen de transport.

ETAT DE LA TECHNIQUE ANTERIEURE

Un moyen de transport, tel qu'un aéronef, un véhicule terrestre, un navire, utilise classiquement une centrale à inertie ou centrale inertielle pour la navigation. La centrale inertielle est capable d'intégrer les mouvements tels que l'accélération, la vitesse angulaire, du moyen de transport, pour estimer son orientation (angles de roulis, de tangage et de cap), sa vitesse linéaire et sa position. L'estimation de position est relative au point de départ ou au dernier point de recalage utilisé pour mettre à jour l'estimation de la position, de la vitesse et de l'attitude du moyen de transport.

Une centrale de navigation inertielle comprend généralement un coeur inertiel et, optionnellement, une plateforme de support du coeur inertiel agencée pour maintenir le coeur inertiel dans un repère inertiel. Le coeur inertiel comprend des capteurs inertiels tels que des gyroscopes et des accéléromètres disposés selon les axes d'un repère de mesure. Après estimation d'un repère géographique pendant l'opération initiale d'alignement, les gyroscopes mesurent des rotations angulaires du repère de mesure par rapport au référentiel géographique et fournissent l'attitude du moyen de transport dans le référentiel géographique. Les accéléromètres mesurent des accélérations qui sont projetées dans le référentiel géographique, puis corrigées du champ gravitationnel terrestre, puis intégrées une première fois pour fournir la vitesse, puis une seconde fois pour fournir la position et mettre à jour le repère géographique. La précision d'une centrale inertielle dépend directement des erreurs des capteurs inertiels, et, dans le cas d'une navigation inertielle de longue durée, les erreurs de position dépendent de manière prépondérante de la précision des gyroscopes. La précision des gyroscopes est affectée par les erreurs de dérive, de facteurs d'échelle, et de calage d'axes.

Il est alors nécessaire d'effectuer un recalage de la centrale inertielle.

Le recalage d'une centrale inertielle est effectué pour corriger des erreurs qui s'accumulent au cours de la navigation du moyen de transport. Le recalage est effectué à partir d'une source d'informations externe qui procède à d'autres mesures que celles effectuées par la centrale inertielle et d'un système de filtrage tel que par exemple un filtre de Kalman.

La demande de brevet US 2015/253150 A1 divulgue un dispositif de recalage d'une centrale inertielle d'un moyen de transport à partir d'informations délivrées par un viseur du moyen de transport, le dispositif comportant : des moyens d'obtention de la centrale inertielle d'un vecteur vitesse horizontale du moyen de transport et de coordonnées du moyen de transport, des moyens d'obtention d'une ligne de visée horizontale du viseur sur au moins un amer, des moyens d'obtention de coordonnées dudit au moins un amer, des moyens de calcul d'un angle entre le vecteur vitesse horizontale et la ligne de visée horizontale, des moyens de calcul d'une erreur de la centrale inertielle à partir des coordonnées obtenues de l'angle.

EXPOSE DE L'INVENTION

Un objet de la présente invention est de proposer un procédé et un dispositif de recalage d'une centrale inertielle d'un moyen de transport à partir d'informations délivrées par un viseur du moyen de transport qui n'utilise pas de mesures de la distance entre le moyen de transport et un amer. Ceci permet ainsi d'éviter l'utilisation de moyens de type radar, s'appuyant en général sur une émission d'ondes électromagnétiques ou sonores, et donc d'être moins détectable par des moyens de détection d'ondes électromagnétiques ou sonores.

A cet effet, la présente invention concerne un dispositif de recalage d'une centrale inertielle selon la revendication 1.

L'invention concerne aussi un procédé de recalage d'une centrale inertielle selon la revendication 9.

Ainsi, il est possible, sans avoir à connaître la distance séparant le moyen de transport d'au moins un amer, de recaler la centrale inertielle. Ceci permet ainsi de ne pas utiliser des instruments de télémétrie, en général peu discrets, pour recaler la centrale inertielle.

Selon un mode particulier, la centrale inertielle fournit au viseur l'orientation du moyen de transport par rapport au repère géographique afin de permettre le positionnement de la ligne de visée dans le plan horizontal.

Selon un mode particulier, l'erreur est calculée uniquement si la dérivée calculée est non nulle. Ainsi, la présente invention garantit que le recalage est effectué uniquement dans des conditions favorables.

Selon un mode particulier, la dérivée est calculée sur une période de temps comprise entre 0.1 et 10 secondes.

Ainsi, la précision du recalage est augmentée.

Selon l'invention, l'erreur est calculée selon la formule suivante :

$$\varepsilon = \begin{pmatrix} Lo \\ La \end{pmatrix} - \begin{pmatrix} Lo_{amer} \\ La_{amer} \end{pmatrix} + \frac{sin\theta}{(R_{Terre} + z_g)\theta'} \left( cos\theta . \begin{pmatrix} V_{xg} \\ V_{yg} \end{pmatrix} + sin\theta . \begin{pmatrix} -V_{yg} \\ V_{xg} \end{pmatrix} \right)$$

dans laquelle $\theta$ est l'angle calculé, $\theta'$ est la dérivée de $\theta$, $V_{xg}$, $V_{yg}$ sont les coordonnées du vecteur vitesse horizontale du moyen de transport, $z_g$ est l'altitude du moyen de transport, $Lo$, $La$ sont la latitude et la longitude du moyen de transport, $Lo_{amer}$, $La_{amer}$ sont la latitude et la longitude d'un amer.

L'invention concerne aussi un aéronef caractérisé en ce qu'il comporte le dispositif de recalage d'une centrale inertielle.

L'invention concerne aussi un navire caractérisé en ce qu'il comporte le dispositif de recalage d'une centrale inertielle.

L'invention concerne aussi un sous-marin caractérisé en ce qu'il comporte le dispositif de recalage d'une centrale inertielle.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] représente un moyen de transport dans lequel la présente invention est implémentée ;

[Fig.2] est un exemple d'une projection dans un plan horizontal d'une navigation d'un moyen de transport le long d'un parcours dans lequel sont placés des amers ;

[Fig. 3] est un exemple d'informations obtenues à deux instants différents au cours du parcours du moyen de transport ;

[Fig. 4] est un exemple du système de recalage d'une centrale inertielle d'un moyen de transport à partir d'informations délivrées par un viseur du moyen de transport selon la présente invention ;

[Fig. 5] représente un exemple d'algorithme pour recaler une centrale inertielle d'un moyen de transport à partir d'informations délivrées par un viseur du moyen de transport selon la présente invention ;

[Fig. 6] représente une architecture d'un module de fourniture de position d'amers selon un mode particulier de réalisation de la présente invention.

EXPOSE DETAILLE DE MODES DE REALISATION

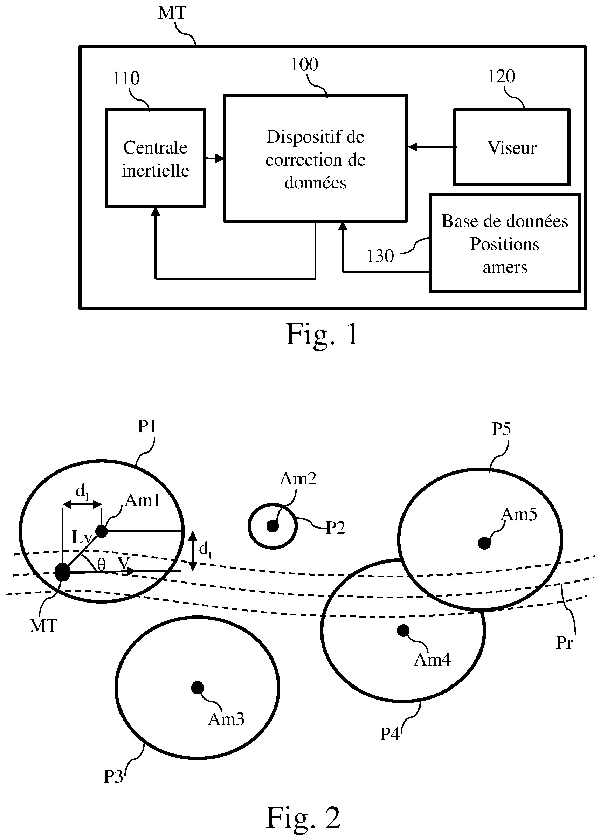

La Fig. 1 représente un moyen de transport dans lequel la présente invention est implémentée. Le moyen de transport MT est par exemple un aéronef, un véhicule terrestre, un sous-marin ou un navire.

Le moyen de transport MT comporte une centrale inertielle 110, un viseur 120, un module de fourniture de positions d'amers 130 et un dispositif de recalage 100.

La centrale inertielle 110 comprend des capteurs inertiels tels que des gyroscopes et des accéléromètres disposés selon les axes du repère de mesure. Les gyroscopes mesurent des rotations angulaires du repère de mesure par rapport à un référentiel géographique et fournissent l'attitude du moyen de transport MT dans le référentiel géographique. Les accéléromètres mesurent des accélérations qui sont projetées dans le référentiel géographique puis corrigées du champ gravitationnel terrestre, puis intégrées une première fois pour fournir la vitesse, puis une seconde fois pour fournir la position.

La centrale inertielle 110, selon la présente invention, est recalée par un dispositif de recalage 100, entre autres, à partir d'un vecteur de visée d'un amer, ou ligne de visée horizontale, fournie par le viseur 120, à partir de la position de l'amer fournie par le module de fourniture de positions d'amers 130 et à partir du vecteur vitesse horizontale du moyen de transport MT mesuré par la centrale inertielle 110.

Le viseur 120, ou tête de visée, est asservi sur la position d'au moins un amer. L'asservissement sur la position d'au moins un amer est réalisé à partir d'informations gyrométriques fournies par un trièdre gyrométrique solidaire de la ligne de visée. La ligne de visée est asservie sur une partie des images capturées par un dispositif de capture d'images non représenté en Fig. 1.

Dans le cas d'un sous-marin, le viseur 120 peut être un sonar passif qui fournit une représentation sous-marine et côtière des émissions sonores dans laquelle il est possible d'identifier des points d'émission particuliers, tenant le rôle des amers vus par le viseur optique d'un aéronef ou d'un navire.

Selon un mode particulier de réalisation, le viseur est relié au module de fourniture de positions d'amers 130.

La Fig. 2 est un exemple d'une projection dans un plan horizontal d'une navigation d'un moyen de transport le long d'un parcours dans lequel sont placés des amers.

Le moyen de transport MT effectue un parcours Pr le long duquel sont disposés des amers Am1 à Am5 dont la position est connue et mémorisée dans le module de fourniture de positions d'amers 130. Lorsque un ou plusieurs amers sont à portée du moyen de transport, MT, la tête de visée pointe sur le ou les amers lorsque le moyen de transport est dans le périmètre de détection du ou des amers.

Les amers Am1 à Am5 sont par exemple des phares côtiers pour la navigation maritime, des amers géographiques pour la navigation aérienne.

Les périmètres de détection des amers Am1 à Am5 sont respectivement notés P1 à P5 en Fig. 2.

L'azimut, ou cap, est l'angle dans le plan horizontal entre la direction du moyen de transport MT et une direction de référence, par exemple le nord.

Dans l'exemple de la Fig. 2, la tête de visée 120 pointe sur l'amer Am1 selon une ligne de visée projetée dans le plan horizontal Lv.

En Fig. 2, sont représentées la distance horizontale transverse dt orthogonale à la vitesse horizontale V entre le moyen de transport MT et l'amer Am1 et la distance horizontale longitudinale $d_1$ selon la vitesse horizontale V entre le moyen de transport MT et l'amer Am1. Ces distances, selon la présente invention, ne sont pas connues.

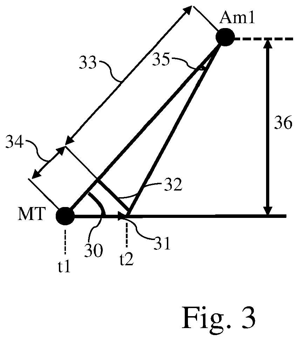

Fig. 3 est un exemple d'informations obtenues à deux différents instants t1 et t2 au cours du parcours du moyen de transport MT.

La distance parcourue selon $d_1$ dans le plan longitudinal entre les instants t1 et t2 est notée 31 et est égale à V.Δt.

La distance $d_t$ dans le plan horizontal perpendiculaire à V est notée 36 en Fig. 3 et est égale à V.Δt.sinθ/tan Δθ où θ noté 30 en Fig. 3 est l'angle entre le vecteur vitesse horizontale V du moyen de transport et la ligne de visée horizontale LvΔθ noté 35 en Fig. 3 est la différence entre les angles θ déterminés aux instants t1 et t2.

La distance notée 32 en Fig. 3 est égale à V.Δt.sinθ, la somme des distances notées 33 et 34 est la distance séparant le moyen de transport MT de l'amer Am1 à l'instant t1.

Si l'on considère que Δt est petit, par exemple égal à 1 seconde, la partie notée 34 en Fig. 3 peut être considérée comme négligeable et il est possible de formuler dt et $d_l$ de la manière suivante :

$$d_t=(V.\sin^2(\theta))/\ d\theta/dt$$

$$d_l=(V.\sin(\theta).\cos(\theta))/\ d\theta/dt$$

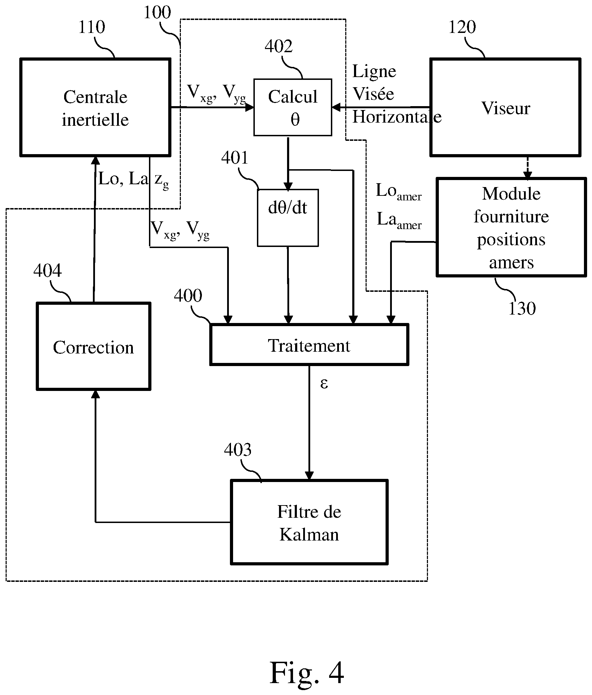

Ces équations permettent de définir un traitement utilisé selon la présente invention pour fournir une erreur à un filtre de navigation et recaler la centrale inertielle 110 comme cela est décrit par la suite en référence à la Fig. 4.

La Fig. 4 est un exemple du système de recalage d'une centrale inertielle d'un moyen de transport à partir d'informations délivrées par un viseur du moyen de transport selon la présente invention.

Le système de recalage comporte la centrale inertielle 110, le viseur 120, le module de fourniture de positions d'amers 130 et le dispositif de recalage 100.

Le dispositif de recalage 100 comporte un module 402 de calcul d'un angle θ entre le vecteur vitesse horizontale V et la ligne visée dans le plan horizontal Lv, un module 401 de calcul de la dérivée de l'angle θ, un module de traitement 400, un filtre de Kalman 403 et un module de correction 404.

Le module 402 de calcul de l'angle θ reçoit de la centrale inertielle 110 uniquement les coordonnées du vecteur vitesse horizontale ($V_{xg}$, $V_{yg}$) du moyen de transport MT et les coordonnées de la ligne de visée dans le plan horizontal Lv. A partir des coordonnées, le module de calcul détermine l'angle θ.

L'angle θ est fourni au module de calcul 401 et au module de traitement 400. Le module de calcul 401 détermine la dérivée θ' ou dθ/dt de l'angle θ et fournit celle-ci au module de traitement 400.

La centrale inertielle 110 fournit au module de traitement 400 les coordonnées du moyen de transport MT que sont l'altitude, la longitude Lo, la latitude La et les coordonnées du vecteur vitesse horizontale ($V_{xg}$, $V_{yg}$) du moyen de transport MT.

Selon un mode particulier, la centrale inertielle 110 fournit au viseur 120 l'orientation du moyen de transport MT par rapport au repère géographique afin de permettre le positionnement de la ligne de visée dans le plan horizontal.

Le module de fourniture de positions d'amers 130 fournit au module de traitement la latitude $La_{amer}$ et la longitude $Lo_{amer}$ de l'amer visé par le viseur 120.

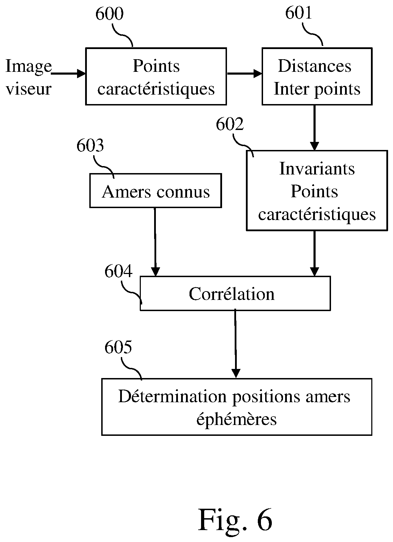

Le module de fourniture de positions d'amers 130 comporte un ensemble d'amers dont la position est connue et dans un mode particulier de réalisation un ensemble d'amers dits éphémères dont la position est déterminée par le module de fourniture de positions d'amers comme cela sera décrit en référence à la Fig. 6.

Selon la présente invention, le module de traitement 400 détermine une erreur de la centrale inertielle à partir des différentes informations reçues selon la formule suivante :

$$\varepsilon = \begin{pmatrix} Lo \\ La \end{pmatrix} - \begin{pmatrix} Lo_{amer} \\ La_{amer} \end{pmatrix} + \frac{sin\theta}{(R_{Terre} + z_g)\theta'}\left(cos\theta.\begin{pmatrix} V_{xg} \\ V_{yg} \end{pmatrix} + sin\theta.\begin{pmatrix} -V_{yg} \\ V_{xg} \end{pmatrix}\right)$$

où $R_{Terre}$ est le rayon de la terre.

Plus particulièrement, le module de traitement détermine l'erreur uniquement si la dérivée de l'angle est non nulle.

L'erreur de la centrale inertielle 110 est introduite dans le filtre de Kalman 403. Le filtre de Kalman 403 est un filtre classique qui estime les états d'un système dynamique à partir d'une série de mesures bruitées.

La correction fournie par le filtre de Kalman 403 est mise en forme par le module de correction 404 pour adapter la correction à la centrale inertielle et la recaler.

Il est à remarquer ici que la dérivée d$\theta$/dt est calculée par le module de calcul 401 sur une durée comprise entre 0.1 seconde pour un avion et 10 secondes pour un navire.

De plus, la présente invention est particulièrement adaptée aux situations dans lesquelles le moyen de transport MT est à une vitesse supérieure à 10 km/h et suit une trajectoire ayant des variations de cap de +/- 20°.

Ainsi la présente invention effectue un recalage de la centrale inertielle 110 à partir de la vitesse de rotation du moyen de transport MT mesurée autour de l'axe vertical de la centrale inertielle 110 et de la vitesse de rotation de la ligne de visée horizontale mesurée autour de l'axe vertical par les gyroscopes du viseur 120 ou plus généralement par des moyens intégrés dans le viseur 120.

S'il n'existe pas de moyens propres intégrés au viseur permettant le calcul de l'orientation de la ligne de visée dans le plan horizontal, par exemple lorsqu'une articulation existe entre la centrale inertielle 110 et le viseur 120, la valeur angulaire de l'articulation est par exemple déterminée comme cela est décrit dans le brevet FR3000219.

La présente invention est aussi applicable lorsque plusieurs amers Am sont visés par le viseur 120. Par exemple, le traitement effectué par le module de traitement 100 est effectué successivement pour chaque amer ou le dispositif de recalage est dupliqué un nombre prédéterminé de fois.

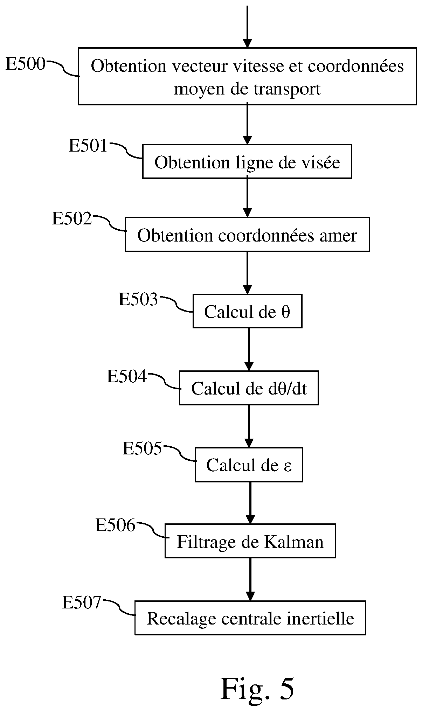

La Fig. 5 représente un exemple d'algorithme pour recaler une centrale inertielle d'un moyen de transport à partir d'informations délivrées par un viseur du moyen de transport selon la présente invention.

A l'étape E500, le dispositif de recalage 100 de la centrale inertielle 110 obtient de la centrale inertielle un vecteur vitesse horizontale du moyen de transport et les coordonnées du moyen de transport.

A l'étape E501, le dispositif de recalage 100 obtient la ligne de visée horizontale du viseur 120 sur au moins un amer.

A l'étape E502, le dispositif de recalage 100 obtient les coordonnées d'au moins un amer. A l'étape E503, le dispositif de recalage 100 calcule un angle entre le vecteur vitesse horizontale et la ligne de visée dans le plan horizontal.

A l'étape E504, le dispositif de recalage 100 dérive l'angle calculé.

A l'étape E505, le dispositif de recalage 100 calcule l'erreur à partir des coordonnées obtenues, de l'angle et de sa dérivée calculés.

A l'étape E506, le dispositif de recalage 100 transfère l'erreur calculée au filtre de Kalman pour un filtrage de l'erreur.

A l'étape E507, la centrale inertielle 110 est recalée.

La Fig. 6 représente une architecture d'un module de fourniture de positions d'amers selon un mode particulier de réalisation de la présente invention.

Le module de fourniture de positions d'amers 130 comporte une base de données de positions d'amers connus 603 qui est enrichie à partir d'images délivrées par le dispositif de capture d'images du viseur 120.

Le module de fourniture de positions d'amers 130 comporte des moyens 600 de détection de points caractéristiques PC dans les images délivrées par le dispositif de capture d'images du viseur 120. Les points caractéristiques PC i et j, où i est l'indice d'un premier point caractéristique et j l'indice d'un second point caractéristique, ont des positions et des vitesses $V_i$-V et $V_j$-V inconnues vis-à-vis du moyen de transport.

Le module de fourniture de positions d'amers 130 comporte des moyens 601 de détermination de distances entre les points caractéristiques PC.

En posant l'équation de la distance entre les deux de points caractéristiques PC i et j, notée $D_{ij}$, dans laquelle $\theta i$ est défini vis-à-vis du vecteur vitesse horizontale V-$V_i$ et $\theta_j$ est défini vis-à-vis du vecteur vitesse horizontale V-Vj nous avons :

$$\mathrm{Dij} = \sqrt{\left(\|V - V_i\|\frac{\sin\theta_i\cos\theta_i}{\dot{\theta}_i} - \|V - V_j\|\frac{\sin\theta_j\cos\theta_j}{\dot{\theta}_j}\right)^2 + \left(\|V - V_i\|\frac{\sin^2\theta_i}{\dot{\theta}_i} - \|V - V_j\|\frac{\sin^2\theta_j}{\dot{\theta}_j}\right)^2}$$

Le module de fourniture de positions d'amers 130 comporte des moyens 602 de détermination d'invariants dans les points caractéristiques. Dans le cas où les points caractéristiques PC i et j ont la même vitesse vis-à-vis du moyen de transport MT, c'est-à-dire lorsque V-V$_i$=V-V$_j$, nous obtenons:

$$D_{ij} = \|V - V_i\|\sqrt{\left(\frac{\sin\theta_i\cos\theta_i}{\dot{\theta}_i} - \frac{\sin\theta_j\cos\theta_j}{\dot{\theta}_j}\right)^2 + \left(\frac{\sin^2\theta_i}{\dot{\theta}_i} - \frac{\sin^2\theta_j}{\dot{\theta}_j}\right)^2} = \|V - V_i\|\sqrt{k_{ij}}$$

$$k_{ij} = \left(\frac{\sin\theta_i\cos\theta_i}{\dot{\theta}_i} - \frac{\sin\theta_j\cos\theta_j}{\dot{\theta}_j}\right)^2 + \left(\frac{\sin^2\theta_i}{\dot{\theta}_i} - \frac{\sin^2\theta_j}{\dot{\theta}_j}\right)^2$$

Lorsque le moyen de transport MT est à vitesse constante, la stabilité de la valeur du coefficient $k_{i,j}$, pendant une durée déterminée, est choisie comme critère permettant de déterminer si les points caractéristiques PC i et j appartiennent probablement à une même famille de points caractéristiques, c'est-à-dire appartiennent probablement à un même objet en translation à la vitesse V-V$_i$ par rapport au moyen de transport MT.

Les moyens 602 de détermination d'invariants dans les points caractéristiques suivent les variations du coefficient $k_{ij}$ lors de variations volontaires de cap et/ou de vitesse ayant pour conséquence la variation de la grandeur V-V$_i$.

Les moyens 602 de détermination d'invariants forment un ensemble de points caractéristiques conservant la valeur des coefficients $k_{ij}$ lors des variations de cap à vitesse constante et/ou possédant des variations de la racine carré de $k_{ij}$ inversement proportionnelles à la norme de V. Les points invariants correspondent à des points caractéristiques qui sont liés à la terre tels que des sommets de montagnes, des routes, des panneaux de signalisation, ou des éléments particuliers de la côte maritime. Sur cet ensemble de points, il est alors possible de calculer les distances entre chaque couple de points caractéristiques selon la formule suivante :

$$D_{ij}\left(= V\sqrt{k_{ij}}\right)$$

et aussi de calculer les distances d$_l$ et d$_t$.

Il est alors possible de créer une cartographie des points caractéristiques observés supposés liés à la terre vis-à-vis de la position du moyen de transport MT.

Le module de fourniture de positions d'amers 130 comporte des moyens 604 de corrélation des positions des amers connus mémorisées dans une base de données 603 d'amers connus avec l'ensemble formé de points caractéristiques.

Les moyens 604 de corrélation identifient les points caractéristiques de l'ensemble formé qui ont une position mémorisée dans la base de données 603.

Le module de fourniture de positions d'amers 130 comporte des moyens 605 de détermination de positions d'amers dits éphémères. Les moyens 605 de détermination de positions d'amers éphémères déterminent, à partir des positions des points identifiés, les positions des autres points caractéristiques de l'ensemble formé. Ces autres points caractéristiques de l'ensemble formé sont appelés éphémères car ils sont susceptibles d'être supprimés dans le temps. Ces positions déterminées enrichissent la base de données 603.

**Revendications**

1. Dispositif de recalage d'une centrale inertielle d'un moyen de transport à partir d'informations délivrées par un viseur du moyen de transport, le dispositif comportant :

- des moyens d'obtention de la centrale inertielle (110) d'un vecteur vitesse horizontale du moyen de transport (MT) et de coordonnées du moyen de transport,
- des moyens d'obtention d'une ligne de visée horizontale du viseur (120) sur au moins un amer,
- des moyens d'obtention (130) de coordonnées dudit au moins un amer,
- des moyens de calcul (402) d'un angle entre le vecteur vitesse horizontale et la ligne de visée horizontale,
- des moyens de dérivation de l'angle calculé,
- des moyens de calcul (400) d'une erreur de la centrale inertielle à partir des coordonnées obtenues, de l'angle et de sa dérivée calculés, l'erreur de la centrale inertielle étant calculée selon la formule suivante :

$$\varepsilon = \begin{pmatrix} Lo \\ La \end{pmatrix} - \begin{pmatrix} Lo_{amer} \\ La_{amer} \end{pmatrix} + \frac{sin\theta}{(R_{Terre} + z_g)\theta'}\left( cos\theta.\begin{pmatrix} V_{xg} \\ V_{yg} \end{pmatrix} + sin\theta.\begin{pmatrix} -V_{yg} \\ V_{xg} \end{pmatrix} \right)$$

dans laquelle $\theta$ est l'angle calculé, $\theta'$ est la dérivée de $\theta$, $V_{xg}$, $V_{yg}$ sont les coordonnées du vecteur vitesse horizontale du moyen de transport, $z_g$ est l'altitude du moyen de transport, $Lo$, $La$ sont la latitude et la longitude du moyen de transport, $Lo_{amer}$, $La_{amer}$ sont la latitude et la longitude dudit au moins un amer,
- des moyens de transfert de l'erreur de la centrale inertielle calculée à un filtre de Kalman (403) pour un filtrage de l'erreur et un recalage de la centrale inertielle (110).

2. Dispositif selon la revendication 1, **caractérisé en ce que** l'erreur est calculée uniquement si la dérivée calculée est non nulle.

3. Dispositif selon la revendication 2, **caractérisé en ce que** la dérivée est calculée sur une période de temps comprise entre 0.1 et 10 secondes.

4. Dispositif selon l'une quelconque des revendications précédentes, **caractérisé en ce que** la centrale inertielle fournit au viseur l'orientation du moyen de transport par rapport au repère géographique pour le positionnement de la ligne de visée dans le plan horizontal.

5. Dispositif selon l'une quelconque des revendications 1 à 4, **caractérisé en ce que** les coordonnées d'au moins un amer sont mémorisées dans une base de données mémorisant des positions d'amers connus et des positions d'amers déterminées à partir d'images délivrées par un dispositif de capture d'images du viseur.

6. Aéronef **caractérisé en ce qu'**il comporte le dispositif de recalage d'une centrale inertielle selon l'une quelconque des revendications 1 à 4.

7. Navire **caractérisé en ce qu'**il comporte le dispositif de recalage d'une centrale inertielle selon l'une quelconque des revendications 1 à 4.

8. Sous-marin **caractérisé en ce qu'**il comporte le dispositif de recalage d'une centrale inertielle selon l'une quelconque des revendications 1 à 4.

9. Procédé de recalage d'une centrale inertielle d'un moyen de transport à partir d'informations délivrées par un viseur du moyen de transport, le procédé comportant les étapes de :

- obtention de la centrale inertielle d'un vecteur vitesse horizontale du moyen de transport et de coordonnées du moyen de transport,
- obtention d'une ligne de visée horizontale du viseur sur au moins un amer,
- obtention de coordonnées dudit au moins un amer,
- calcul d'un angle entre le vecteur vitesse horizontale et la ligne de visée horizontale,
- dérivation de l'angle calculé,
- calcul d'une erreur de la centrale inertielle à partir des coordonnées obtenues, de l'angle et de sa dérivée calculés, , l'erreur de la centrale inertielle étant calculée selon la formule suivante :

$$\varepsilon = \begin{pmatrix} Lo \\ La \end{pmatrix} - \begin{pmatrix} Lo_{amer} \\ La_{amer} \end{pmatrix} + \frac{sin\theta}{(R_{Terre} + z_g)\theta'} \left( cos\theta . \begin{pmatrix} V_{xg} \\ V_{yg} \end{pmatrix} + sin\theta . \begin{pmatrix} -V_{yg} \\ V_{xg} \end{pmatrix} \right),$$

dans laquelle θ est l'angle calculé, θ' est la dérivée de θ, $V_{xg}$, $V_{yg}$ sont les coordonnées du vecteur vitesse horizontale du moyen de transport, $z_g$ est l'altitude du moyen de transport, Lo, La sont la latitude et la longitude du moyen de transport, $Lo_{amer}$, $La_{amer}$ sont la latitude et la longitude dudit au moins un amer,
- transfert de l'erreur de la centrale inertielle calculée à un filtre de Kalman pour un filtrage de l'erreur et un recalage de la centrale inertielle.

**Patentansprüche**

1. Vorrichtung zur Neueinstellung eines Trägheitsnavigationssystems eines Transportmittels ausgehend von von einem Zielgerät des Transportmittels gelieferten Informationen, wobei die Vorrichtung aufweist:

   - Einrichtungen zum Erhalt eines horizontalen Geschwindigkeitsvektors des Transportmittels (MT) und von Koordinaten des Transportmittels vom Trägheitsnavigationssystem (110),
   - Einrichtungen zum Erhalt einer horizontalen Ziellinie des Zielgeräts (120) auf mindestens eine Landmarke,
   - Einrichtungen zum Erhalt (130) von Koordinaten der mindestens einen Landmarke,
   - Einrichtungen zur Berechnung (402) eines Winkels zwischen dem horizontalen Geschwindigkeitsvektor und der horizontalen Ziellinie,
   - Einrichtungen zur Ableitung des berechneten Winkels,
   - Einrichtungen zur Berechnung (400) eines Fehlers des Trägheitsnavigationssystems ausgehend von den erhaltenen Koordinaten, vom berechneten Winkel und seiner Ableitung, wobei der Fehler des Trägheitsnavigationssystems gemäß der folgenden Formel berechnet wird:

$$\varepsilon = \begin{pmatrix} Lo \\ La \end{pmatrix} - \begin{pmatrix} Lo_{Landmarke} \\ La_{Landmarke} \end{pmatrix} + \frac{sin\theta}{(R_{Land}+z_g)\theta'} \left( cos\theta \cdot \begin{pmatrix} V_{xg} \\ V_{yg} \end{pmatrix} + sin\theta \cdot \begin{pmatrix} -V_{yg} \\ V_{xg} \end{pmatrix} \right),$$

   in der θ der berechnete Winkel ist, θ' die Ableitung von θ ist, $V_{xg}$, $V_{yg}$ die Koordinaten des horizontalen Geschwindigkeitsvektors des Transportmittels sind, $z_g$ die Höhe des Transportmittels ist, Lo, La die Breite und die Länge des Transportmittels sind, $Lo_{Landmarke}$, $La_{Landmarke}$ die Breite und die Länge der mindestens einen Landmarke sind,
   - Einrichtungen zur Übertragung des berechneten Fehlers des Trägheitsnavigationssystems an ein Kalman-Filter (403) für eine Filterung des Fehlers und eine Neueinstellung des Trägheitsnavigationssystems (110).

2. Vorrichtung nach Anspruch 1, **dadurch gekennzeichnet, dass** der Fehler nur berechnet wird, wenn die berechnete Ableitung ungleich Null ist.

3. Vorrichtung nach Anspruch 2, **dadurch gekennzeichnet, dass** die Ableitung über einen Zeitraum zwischen 0,1 und 10 Sekunden berechnet wird.

4. Vorrichtung nach einem der vorhergehenden Ansprüche, **dadurch gekennzeichnet, dass** das Trägheitsnavigationssystem dem Zielgerät die Ausrichtung des Transportmittels bezüglich des geographischen Koordinatensystems zur Positionierung der Ziellinie in der horizontalen Ebene liefert.

5. Vorrichtung nach einem der Ansprüche 1 bis 4, **dadurch gekennzeichnet, dass** die Koordinaten mindestens einer Landmarke in einer Datenbank gespeichert werden, die Positionen von bekannten Landmarken und Positionen von Landmarken speichert, die ausgehend von Bildern bestimmt werden, die von einer Bildaufnahmevorrichtung des Zielgeräts geliefert werden.

6. Luftfahrzeug, **dadurch gekennzeichnet, dass** es die Vorrichtung zur Neueinstellung eines Trägheitsnavigationssystems nach einem der Ansprüche 1 bis 4 aufweist.

**7.** Schiff, **dadurch gekennzeichnet, dass** es die Vorrichtung zur Neueinstellung eines Trägheitsnavigationssystems nach einem der Ansprüche 1 bis 4 aufweist.

**8.** U-Boot, **dadurch gekennzeichnet, dass** es die Vorrichtung zur Neueinstellung eines Trägheitsnavigationssystems nach einem der Ansprüche 1 bis 4 aufweist.

**9.** Verfahren zur Neueinstellung eines Trägheitsnavigationssystems eines Transportmittels ausgehend von von einem Zielgerät des Transportmittels gelieferten Informationen, wobei das Verfahren folgende Schritte aufweist:

- Erhalt eines horizontalen Geschwindigkeitsvektors des Transportmittels und von Koordinaten des Transportmittels vom Trägheitsnavigationssystem,
- Erhalt einer horizontalen Ziellinie des Zielgeräts auf mindestens eine Landmarke,
- Erhalt von Koordinaten der mindestens einen Landmarke,
- Berechnung eines Winkels zwischen dem horizontalen Geschwindigkeitsvektor und der horizontalen Ziellinie,
- Ableitung des berechneten Winkels,
- Berechnung eines Fehlers des Trägheitsnavigationssystems ausgehend von den erhaltenen Koordinaten, vom berechneten Winkel und seiner Ableitung, wobei der Fehler des Trägheitsnavigationssystems gemäß der folgenden Formel berechnet wird:

$$\varepsilon = \begin{pmatrix} Lo \\ La \end{pmatrix} - \begin{pmatrix} Lo_{Landmarke} \\ La_{Landmarke} \end{pmatrix} + \frac{sin\theta}{(R_{Land}+z_g)\theta\prime}\left( cos\theta \cdot \begin{pmatrix} V_{xg} \\ V_{yg} \end{pmatrix} + sin\theta \cdot \begin{pmatrix} -V_{yg} \\ V_{xg} \end{pmatrix}\right),$$

in der $\theta$ der berechnete Winkel ist, $\theta\prime$ die Ableitung von $\theta$ ist, $V_{xg}$, $V_{yg}$ die Koordinaten des horizontalen Geschwindigkeitsvektors des Transportmittels sind, $z_g$ die Höhe des Transportmittels ist, Lo, La die Breite und die Länge des Transportmittels sind, $Lo_{Landmarke}$, $La_{Landmarke}$ die Breite und die Länge der mindestens einen Landmarke sind,
- Übertragung des berechneten Fehlers des Trägheitsnavigationssystems an ein Kalman-Filter für eine Filterung des Fehlers und eine Neueinstellung des Trägheitsnavigationssystems.

**Claims**

**1.** Device for resetting an inertial unit of a transport means on the basis of information delivered by a viewfinder of the transport means, the device comprising:

- means for obtaining from the inertial unit (110) a horizontal velocity vector of the transport means (MT) and coordinates of the transport means,
- means for obtaining a horizontal line of sight from the viewfinder (120) on at least one landmark,
- means (130) for obtaining coordinates of said at least one landmark,
- means (402) for computing an angle between the horizontal velocity vector and the horizontal line of sight,
- means for computing the drift of the computed angle,
- means (400) for computing an error of the inertial unit on the basis of the obtained coordinates, the computed angle and its computed drift, the error of the inertial unit being computed according to the following formula:

$$\varepsilon = \begin{pmatrix} Lo \\ La \end{pmatrix} - \begin{pmatrix} Lo_{amer} \\ La_{amer} \end{pmatrix} + \frac{sin\theta}{(R_{Terre}+z_g)\theta\prime}\left( cos\theta . \begin{pmatrix} V_{xg} \\ V_{yg} \end{pmatrix} + sin\theta . \begin{pmatrix} -V_{yg} \\ V_{xg} \end{pmatrix}\right)$$

wherein $\theta$ is the computed angle, $\theta\prime$ is the drift of $\theta$, $V_{xg}$, $V_{yg}$ are the coordinates of the horizontal velocity vector of the transport means, $z_g$ is the altitude of the transport means, Lo, La are the latitude and longitude of the transport means, and $Lo_{amer}$, $La_{amer}$ are the latitude and longitude of said at least one landmark,
- means for transferring the computed error of the inertial unit to a Kalman filter (403) for error filtering and resetting of the inertial unit (110).

**2.** Device according to Claim 1, **characterized in that** the error is computed only if the computed drift is not equal to zero.

3. Device according to Claim 2, **characterized in that** the drift is computed over a time period between 0.1 and 10 seconds.

4. Device according to any one of the preceding claims, **characterized in that** the inertial unit provides the viewfinder with the orientation of the transport means with respect to the geographical reference for positioning the line of sight in the horizontal plane.

5. Device according to any one of Claims 1 to 4, **characterized in that** the coordinates of at least one landmark are stored in a database storing known landmark positions and landmark positions determined from images delivered by a viewfinder image capture device.

6. Aircraft **characterized in that** it comprises the device for resetting an inertial unit according to any one of Claims 1 to 4.

7. Vessel **characterized in that** it comprises the device for resetting an inertial unit according to any one of Claims 1 to 4.

8. Submarine **characterized in that** it comprises the device for resetting an inertial unit according to any one of Claims 1 to 4.

9. Method for resetting an inertial unit of a transport means on the basis of information delivered by a viewfinder of the transport means, the method comprising the steps of:

- obtaining from the inertial unit a horizontal velocity vector of the transport means and coordinates of the transport means,
- obtaining a horizontal line of sight from the viewfinder on at least one landmark,
- obtaining coordinates of said at least one landmark,
- computing an angle between the horizontal velocity vector and the horizontal line of sight,
- computing the drift of the computed angle,
- computing an error of the inertial unit on the basis of the obtained coordinates, the computed angle and its computed drift, the error of the inertial unit being computed according to the following formula:

$$\varepsilon = \begin{pmatrix} Lo \\ La \end{pmatrix} - \begin{pmatrix} Lo_{amer} \\ La_{amer} \end{pmatrix} + \frac{\sin\theta}{(R_{Terre} + z_g)\theta'}\left( \cos\theta.\begin{pmatrix} V_{xg} \\ V_{yg} \end{pmatrix} + \sin\theta.\begin{pmatrix} -V_{yg} \\ V_{xg} \end{pmatrix} \right)$$

wherein $\theta$ is the computed angle, $\theta'$ is the drift of $\theta$, $V_{xg}$, $V_{yg}$ are the coordinates of the horizontal velocity vector of the transport means, $z_g$ is the altitude of the transport means, $Lo$, $La$ are the latitude and longitude of the transport means, and $Lo_{amer}$, $La_{amer}$ are the latitude and longitude of said at least one landmark,
- transferring the computed error of the inertial unit to a Kalman filter for error filtering and resetting of the inertial unit.

Fig. 1

Fig. 2

Fig. 3

Fig. 4

E500 — Obtention vecteur vitesse et coordonnées moyen de transport

E501 — Obtention ligne de visée

E502 — Obtention coordonnées amer

E503 — Calcul de θ

E504 — Calcul de dθ/dt

E505 — Calcul de ε

E506 — Filtrage de Kalman

E507 — Recalage centrale inertielle

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015253150 A1
- FR 3000219